# EUROPEAN PATENT APPLICATION

(11) **EP 4 738 451 A1**
(43) Date of publication of application: **06.05.2026**
(21) Application number: 24854392.8
(22) Date of filing: 07.08.2024
(51) Int. Cl.: H01M 4/133, H01M 4/62, H01M 4/1393, H01M 4/66, H01M 4/04, H01M 10/052, H01M 4/02

(54) **ANODE FOR LITHIUM SECONDARY BATTERY, MANUFACTURING METHOD THEREFOR AND LITHIUM SECONDARY BATTERY COMPRISING SAME**

(30) Priority: 16.08.2023 KR 20230107173
(71) Applicant: LG Chem, Ltd., Seoul 07336 (KR)
(72) Inventor: YI, Yeonhui, Daejeon 34122 (KR); KO, Kyung Moon, Daejeon 34122 (KR); JUNG, Soonhwa, Daejeon 34122 (KR); HONG, Ja Min, Daejeon 34122 (KR)
(74) Representative: Hoffmann Eitle
(86) International application number: PCT/KR2024/011732
(87) International publication number: WO 2025/037840

(57) **Abstract**

The present invention relates to a negative electrode for a lithium secondary battery, including: a metal current collector; a coating layer formed on at least one surface of the metal current collector and including a first binder and a first conductive material; and a negative electrode active material layer formed on the coating layer and including a negative electrode active material, a second conductive material, and a second binder, as well as a method for producing the same and a lithium secondary battery including the same.

## Description

### Technical Field

This application claims the benefit of the filing date of Korean Patent Application No. 10-2023-0107173 filed with the Korean Intellectual Property Office on August 16, 2023, the entire contents of which are incorporated herein by reference.

The present invention relates to a negative electrode for a lithium secondary battery, which has improved peeling resistance and adhesion of a negative electrode active material layer, which may improve the life characteristics of the negative electrode and the lithium secondary battery, a method for producing the same, and a lithium secondary battery including the same.

### Background Art

Technological development and increased demand for mobile devices and electric vehicles have led to a rapid increase in the demand for lithium secondary batteries as an energy source. Among these lithium secondary batteries, lithium secondary batteries with high energy density and voltage, long cycle life, and low discharge rate have been commercialized and widely used.

In general, a lithium secondary battery has a structure in which an electrode assembly including a positive electrode including an active material applied onto a metal current collector, a negative electrode including an active material applied onto a metal current collector, and a porous separator interposed between the positive electrode and the negative electrode is impregnated with an electrolyte containing a lithium salt. Here, each of the electrodes is produced by applying onto the metal current collector a slurry composition in which an active material, a binder, and a conductive material are dispersed in a solvent, followed by pressing and drying.

Therefore, the life characteristics of the lithium secondary battery may be mainly determined depending on how long the electrochemical characteristics of the electrode, particularly, the active material layer, are maintained. However, in the case of a conventional lithium secondary battery, there have been many cases where the active material layer is peeled off from the metal current collector in the negative electrode as the period of use elapses, resulting in deterioration in the life characteristics of the lithium secondary battery.

This appears to be because the active material layer of the negative electrode contains, as a main component, a graphite-based negative electrode active material having properties different from those of metals, and thus it is difficult to ensure sufficient adhesion, close adhesion and peeling resistance of the active material layer to the metal current collector. Due to this poor adhesion of the active material layer of the negative electrode, there is a disadvantage in that the active material layer is easily peeled off from the metal current collector as the lithium secondary battery is used for an extended period of time. In addition, a problem arises in that the peeled active material layer can no longer function as an active region of the lithium secondary battery, and thus the charge/discharge cycle characteristics of the lithium secondary battery rapidly deteriorate.

Due to these problems, there is a continuous demand for the development of technology that may improve the life characteristics of the lithium secondary battery by further improving the adhesion and the like of the active material layer included in the negative electrode.

### DISCLOSURE

### Technical Problem

Accordingly, the present invention is intended to provide a negative electrode for a lithium secondary battery, which has improved peeling resistance and adhesion of a negative electrode active material layer, which may improve the life characteristics of the negative electrode and the lithium secondary battery, and a method for producing the same.

The present invention is also intended to provide a lithium secondary battery that exhibits improved life characteristics by including the negative electrode for a lithium secondary battery.

### Technical Solution

The present invention provides a negative electrode for a lithium secondary battery, including: a metal current collector; a coating layer formed on at least one surface of the metal current collector and including a first binder and a first conductive material; and a negative electrode active material layer formed on the coating layer and including a negative electrode active material, a second conductive material and a second binder, wherein the first conductive material includes multi-walled carbon nanotubes, the coating layer includes the first binder in an amount of 400 parts by weight to 2,000 parts by weight based on 100 parts by weight of the multi-walled carbon nanotubes, and the ratio of the thickness of the coating layer to the thickness of the negative electrode active material layer is 0.005 to 0.2.

The present invention also provides a method for producing a negative electrode for a lithium secondary battery, including steps of: applying a slurry composition for forming a coating layer, which includes a first binder, a first conductive material, and a solvent, onto a metal current collector, followed by drying to form a coating layer; applying a negative electrode slurry composition, which includes a negative electrode active material, a second binder, a second conductive material, and a solvent, onto the coating layer; and pressing the negative electrode slurry composition, wherein the first conductive material includes multi-walled carbon nanotubes, and the slurry composition for forming a coating layer includes the first binder in an amount of 400 parts by weight to 2,000 parts by weight based on 100 parts by weight of the multi-walled carbon nanotubes.

The present invention also provides a lithium secondary battery including the negative electrode for a lithium secondary battery.

### Advantageous Effects

According to the present invention, it is possible to provide a negative electrode for a lithium secondary battery, which has improved peeling resistance and adhesion of the negative electrode active material layer, which may improve the life characteristics of the negative electrode and the lithium secondary battery, a method for producing the same, and a lithium secondary battery including the same.

In the case of such a negative electrode for a lithium secondary battery, even when the lithium secondary battery is used for a long period of time, the phenomenon in which the active material layer is peeled off from the metal current collector may be significantly reduced, and as a result, the excellent charge/discharge cycle characteristics of the lithium secondary battery may be maintained for a long period of time.

Accordingly, a lithium secondary battery including the negative electrode for a lithium secondary battery may exhibit significantly improved life characteristics, and thus may be very advantageously used as a power supply means for mobile devices and electric vehicles.

### Best Mode

Hereinafter, a negative electrode for a lithium secondary battery, a method for producing the same, and a lithium secondary battery including the same according to one embodiment of the present invention will be described in more detail.

Throughout the present specification, unless otherwise specified, the term "including" or "containing" refers to including any constituent element (or constituent component) without limitation, and is not to be construed as excluding the addition of other constituent elements (or constituent components).

In the present invention, terms such as first, second, etc. are used to describe various components, and these terms are used only for the purpose of distinguishing one component from another component.

In addition, unless the steps included in the production method described in the present specification are specified as being sequential or consecutive, or stated otherwise, one step and another step included in the production method should not be construed as being limited to the order described in the specification. Therefore, the order of steps included in the production method may be changed within a range that can be easily understood by those skilled in the art, and in this case, incidental changes obvious to those skilled in the art are fall within the scope of the present invention.

According to one embodiment of the present invention, there is provided a negative electrode for a lithium secondary battery, including: a metal current collector; a coating layer formed on at least one surface of the metal current collector and including a first binder and a first conductive material; and a negative electrode active material layer formed on the coating layer and including a negative electrode active material, a second conductive material and a second binder, wherein the first conductive material includes multi-walled carbon nanotubes, and the coating layer includes the first binder in an amount of 400 parts by weight to 2,000 parts by weight based on 100 parts by weight of the multi-walled carbon nanotubes.

The inventors of the present invention have continued studies to improve the adhesion and peeling resistance of the active material layer of the negative electrode to the metal current collector.

As a result of these continuous studies, the inventors of the present invention have found that, when a coating layer including a first binder and a first conductive material is formed on a metal current collector, in which the first conductive material includes multi-walled carbon nanotubes and the coating layer includes the first binder in an amount of 400 parts by weight to 2,000 parts by weight based on 100 parts by weight of the multi-walled carbon nanotubes, the peeling resistance of the negative electrode active material layer may be significantly improved as the coating layer includes the multi-walled carbon nanotubes that have their own strength, unlike conventionally used nano-sized particles, and the coating layer may significantly improve the adhesion of the negative electrode active material layer by exhibiting excellent adhesion to the negative electrode active material layer.

Specifically, as the coating layer formed between the metal current collector and the negative electrode active material layer includes the first conductive material including multi-walled carbon nanotubes and includes the first binder in an amount of 400 parts by weight to 2,000 parts by weight based on 100 parts by weight of the multi-walled carbon nanotubes, the peeling resistance of the coating layer may be significantly improved as the coating layer includes the multi-walled carbon nanotubes that have their own strength, unlike conventionally used nano-sized particles, and at the same time, the first binder may significantly improve the adhesion of the negative electrode active material layer by exhibiting excellent adhesion without side reactions with the electrode.

Thus, according to an embodiment of the present invention, it is possible to produce and provide a negative electrode for a lithium secondary battery having significantly improved peeling resistance and adhesion of the negative electrode active material layer by including the coating layer between the metal current collector and the negative electrode active material layer. In the case of such a negative electrode for a lithium secondary battery, even when the lithium secondary battery is used for a long period of time, the phenomenon in which the negative electrode active material layer is peeled off from the metal current collector may be significantly reduced, and as a result, the life characteristics of the lithium secondary battery may be significantly improved.

Hereinafter, a negative electrode for a lithium secondary battery according to one embodiment will be described in more detail.

A negative electrode for a lithium secondary battery according to one embodiment basically includes a metal current collector, a coating layer formed on the metal current collector, and an active material layer formed on the coating layer.

Specifically, the negative electrode for a lithium secondary battery according to the embodiment may include: a metal current collector; a coating layer formed on at least one surface of the metal current collector and including a first binder and a first conductive material; and a negative electrode active material layer formed on the coating layer and including a negative electrode active material, a second conductive material, and a second binder.

As the negative electrode for a lithium secondary battery according to one embodiment includes the coating layer, the coating layer may significantly improve the adhesion and peeling resistance of the negative electrode active material layer by exhibiting excellent adhesion to the negative electrode active material layer.

The coating layer may include a first binder and a first conductive material.

As the first binder, various polymer binders may be used, such as a polyvinylidene fluoride-hexafluoropropylene copolymer (PVDF-co-HFP), polyvinylidene fluoride, polyacrylonitrile, polymethylmethacrylate, polyvinyl alcohol, carboxymethyl cellulose (CMC), starch, hydroxypropyl cellulose, regenerated cellulose, polyvinyl pyrrolidone, tetrafluoroethylene, polyethylene, polypropylene, polyacrylic acid, styrene butadiene rubber (SBR), or other various copolymers. Thereamong, styrene butadiene rubber (SBR) or the like may be preferably used in consideration of excellent adhesion to the metal current collector and excellent dispersibility in the negative electrode active material and the conductive material.

The first conductive material may include multi-walled carbon nanotubes.

As the coating layer includes multi-walled carbon nanotubes as the first conductive material, the peeling resistance may be significantly improved as the coating layer includes the multi-walled carbon nanotubes that have their own strength, unlike conventionally used nano-sized particles.

Specifically, the coating layer may include the first binder in an amount of 400 parts by weight to 2,000 parts by weight based on 100 parts by weight of the multi-walled carbon nanotubes.

More specifically, the coating layer may include the first binder in an amount of 400 parts by weight or more, 450 parts by weight or more, or 500 parts by weight or more, and 2,000 parts by weight or less, 1,500 parts by weight or less, or 1,000 parts by weight or less, 400 parts by weight to 2,000 parts by weight, 400 parts by weight to 1,500 parts by weight, 400 parts by weight to 1,000 parts by weight, 450 parts by weight to 2,000 parts by weight, 450 parts by weight to 1,500 parts by weight, 450 parts by weight to 1,000 parts by weight, 500 parts by weight to 2,000 parts by weight, 500 parts by weight to 1,500 parts by weight, or 500 parts by weight to 1,000 parts by weight, based on 100 parts by weight of the multi-walled carbon nanotubes.

As the coating layer includes the first binder in an amount of 400 parts by weight to 2,000 parts by weight based on 100 parts by weight of the multi-walled carbon nanotubes, the peeling resistance may be significantly improved as the coating layer includes the multi-walled carbon nanotubes that have their own strength, unlike conventionally used nano-sized particles, and at the same time, the first binder may significantly improve the adhesion of the negative electrode active material layer by exhibiting excellent adhesion without side reactions with the electrode.

If the coating layer includes the first binder in an amount of less than 400 parts by weight based on 100 parts by weight of the multi-walled carbon nanotubes, the adhesion thereof may be reduced as the coating layer includes an excessively small amount of the first binder that exhibits adhesion, and if the coating layer includes the first binder in an amount of more than 2,000 parts by weight, the interfacial resistance may increase as the coating layer includes an excessively small amount of the conductive material.

The multi-walled carbon nanotubes included in the coating layer may have a specific surface area of 100 m²/g to 400 m²/g.

More specifically, the multi-walled carbon nanotubes included in the coating layer may have a specific surface area of 100 m²/g or more, 150 m²/g or more, 200 m²/g or more, 300 m²/g or more, 350 m²/g or more, or 380 m²/g or more, and 400 m²/g or less, or 390 m²/g or less, 100 m²/g to 400 m²/g, 150 m²/g to 400 m²/g, 200 m²/g to 400 m²/g, 300 m²/g to 400 m²/g, 350 m²/g to 400 m²/g, 380 m²/g to 400 m²/g, 100 m²/g to 390 m²/g, 200 m²/g to 390 m²/g, 300 m²/g to 390 m²/g, 350 m²/g to 390 m²/g, or 380 m²/g to 390 m²/g.

As the specific surface area of the multi-walled carbon nanotubes is 100 m²/g to 400 m²/g, the dispersibility of the conductive material may be ensured.

If the specific surface area of the multi-walled carbon nanotubes is less than 100 m²/g, the entanglement of the multi-walled carbon nanotubes may be excessive, which may reduce the dispersibility of the conductive material. If the specific surface area of the multi-walled carbon nanotubes is more than 400 m²/g, production may be difficult.

In addition, the multi-walled carbon nanotubes included in the coating layer may have a diameter of 1 nm to 40 nm and a length of 10 µm to 30 µm.

Specifically, the multi-walled carbon nanotubes included in the coating layer may have a diameter of 1 nm or more, 3 nm or more, 5 nm or more, or 10 nm or more, and 40 nm or less, 30 nm or less, 20 nm or less, or 15 nm or less, 1 nm to 40 nm, 3 nm to 40 nm, 5 nm to 40 nm, 10 nm to 40 nm, 1 nm to 30 nm, 3 nm to 30 nm, 5 nm to 30 nm, 10 nm to 30 nm, 1 nm to 20 nm, 3 nm to 20 nm, 5 nm to 20 nm, 10 nm to 20 nm, 1 nm to 15 nm, 3 nm to 15 nm, 5 nm to 15 nm, or 10 nm to 15 nm.

Specifically, the multi-walled carbon nanotubes included in the coating layer may have a length of 10 µm or more, or 15 µm or more, and 30 µm or less, or 20 µm or less, 10 µm to 30 µm, 15 µm to 30 µm, 10 µm to 20 µm, or 15 µm to 20 µm.

In addition, the multi-walled carbon nanotubes included in the coating layer may have a bulk density of 20 kg/m³ to 200 kg/m³.

Specifically, the multi-walled carbon nanotubes included in the coating layer may have a bulk density of 20 kg/m³ or more, 50 kg/m³ or more, 60 kg/m³ or more, or 75 kg/m³ or more, and 200 kg/m³ or less, or 160 kg/m³ or less, 20 kg/m³ to 200 kg/m³, 20 kg/m³ to 160 kg/m³, 50 kg/m³ to 200 kg/m³, 50 kg/m³ to 160 kg/m³, 60 kg/m³ to 200 kg/m³, 60 kg/m³ to 160 kg/m³, 75 kg/m³ to 200 kg/m³, or 75 kg/m³ to 160 kg/m³.

As the bulk density of the multi-walled carbon nanotubes included in the coating layer satisfies the range of 20 kg/m³ to 200 kg/m³, the multi-walled carbon nanotubes may be easily controlled and may also exhibit excellent electrical characteristics even when used in small amounts.

If the bulk density of the multi-walled carbon nanotubes included in the coating layer does not satisfy the range of 20 kg/m³ to 200 kg/m³, it may be difficult to control the multi-walled carbon nanotubes.

The coating layer may further include an additional conductive material in addition to the multi-walled carbon nanotubes as the first conductive material.

The first conductive material is not particularly limited as long as it has conductivity without causing chemical changes in the battery. Examples of the first conductive material that may be used include carbon black-based conductive materials such as carbon black, acetylene black, Ketjen black, channel black, furnace black, lamp black, and thermal black; conductive fibers such as carbon fibers or metal fibers; metal powders such as fluorocarbon, aluminum, and nickel powders; conductive whiskers such as zinc oxide and potassium titanate; conductive metal oxides such as titanium oxide; and conductive materials such as polyphenylene derivatives.

The first conductive material may include at least one selected from the group consisting of carbon black, acetylene black, Ketjen black, channel black, furnace black, lamp black, and thermal black.

For example, the coating layer may include multi-walled carbon nanotubes and carbon black as the first conductive material.

The coating layer may include the multi-walled carbon nanotubes in an amount of 40 wt% to 100 wt% based on the total weight of the first conductive material.

Specifically, the coating layer may include the multi-walled carbon nanotubes in an amount of 40 wt% or more, 50 wt% or more, and 100 wt% or less, or 80 wt% or less, 40 wt% to 100 wt%, 40 wt% to 80 wt%, 50 wt% to 100 wt%, or 50 wt% to 80 wt%, based on the total weight of the first conductive material.

As the coating layer includes the multi-walled carbon nanotubes in an amount of 40 wt% to 100 wt% based on the total weight of the first conductive material, the multi-walled carbon nanotubes in the form of fibers may have excellent scratch resistance as they are combined with the first binder, and exhibit excellent adhesion and low interfacial resistance, thereby providing an electrochemically excellent negative electrode for a lithium secondary battery.

If the coating layer includes the multi-walled carbon nanotubes in an amount of less than 40 wt% based on the total weight of the first conductive material, a problem may arise in that the coating layer has poor scratch resistance.

The coating layer may have a thickness of 0.1 µm to 5.0 µm.

Specifically, the coating layer may have a thickness of 0.1 µm or more, 0.5 µm or more, or 1.0 µm or more, and 5.0 µm or less, 4.0 µm or less, 3.0 µm or less, 2.0 µm or less, 1.5 µm or less, 0.1 µm to 5.0 µm, 0.1 µm to 4.0 µm, 0.1 µm to 3.0 µm, 0.1 µm to 2.0 µm, 0.1 µm to 1.5 µm, 0.5 µm to 5.0 µm, 0.5 µm to 4.0 µm, 0.5 µm to 3.0 µm, 0.5 µm to 2.0 µm, 0.5 µm to 1.5 µm, 1.0 µm to 5.0 µm, 1.0 µm to 4.0 µm, 1.0 µm to 3.0 µm, 1.0 µm to 2.0 µm, or 1.0 µm to 1.5 µm.

As the coating layer has a thickness of 0.1 µm to 5.0 µm, it may simultaneously exhibit excellent adhesion and scratch resistance and a low interface resistance value.

If the coating layer has a thickness of less than 0.1 µm, sufficient adhesion between the coating layer and the negative electrode active material layer may not be achieved or scratch resistance may be reduced, and if the coating layer has a thickness of more than 5.0 µm, interfacial resistance may excessively increase.

As the metal current collector, any metal current collector that has been used as an electrode current collector for a lithium secondary battery, etc., for example, a metal current collector that has conductivity without causing chemical changes in the battery, may be used without particular limitation. Specific examples of such a metal current collector include current collectors including at least one metal selected from the group consisting of copper, stainless steel, aluminum, nickel, and titanium. Among these metal current collectors, a copper current collector may be used in consideration of the excellent conductivity of the negative electrode for a lithium secondary battery and excellent adhesion to the active material layer.

Although the thickness of the metal current collector is not particularly limited, the metal current collector may have a thickness of 3 µm to 500 µm, which is typically applied.

Specifically, the metal current collector may have a thickness of 3 µm or more, 5 µm or more, or 7 µm or more, and 500 µm or less, 300 µm or less, 100 µm or less, or 50 µm or less, 3 µm to 500 µm, 3 µm to 300 µm, 3 µm to 100 µm, 3 µm to 50 µm, 5 µm to 500 µm, 5 µm to 300 µm, 5 µm to 100 µm, 5 µm to 50 µm, 7 µm to 500 µm, 7 µm to 300 µm, 7 µm to 100 µm, or 7 µm to 50 µm.

The negative electrode active material layer may include, for example, a negative electrode active material including a graphite-based active material, a second binder, and a second conductive material.

Specific examples of the negative electrode active material may include at least one graphite-based active material selected from the group consisting of natural graphite, artificial graphite, fibrous artificial graphite, graphitized black, and graphitized nanofibers, and may further include, in addition to the graphite-based active material, an additional active material such as a silicon-based active material.

In addition, as the second binder, various polymer binders may be used, such as a polyvinylidene fluoride-hexafluoropropylene copolymer (PVDF-co-HFP), polyvinylidene fluoride, polyacrylonitrile, polymethylmethacrylate, polyvinyl alcohol, carboxymethyl cellulose (CMC), starch, hydroxypropyl cellulose, regenerated cellulose, polyvinyl pyrrolidone, tetrafluoroethylene, polyethylene, polypropylene, polyacrylic acid, styrene butadiene rubber (SBR), or other various copolymers. Thereamong, a polyvinylidene fluoride polymer or copolymer may be preferably used in consideration of excellent adhesion to the metal current collector and excellent dispersibility in the negative electrode active material and the conductive material.

Further, the second conductive material is not particularly limited as long as it has conductivity without causing chemical changes in the battery. Examples of the second conductive material that may be used include carbon black-based conductive materials such as carbon black, acetylene black, Ketjen black, channel black, furnace black, lamp black, and thermal black; conductive fibers such as carbon fibers or metal fibers; metal powders such as fluorocarbon, aluminum, and nickel powders; conductive whiskers such as zinc oxide and potassium titanate; conductive metal oxides such as titanium oxide; and conductive materials such as polyphenylene derivatives.

The second conductive material may include at least one selected from the group consisting of carbon black, acetylene black, Ketjen black, channel black, furnace black, lamp black, and thermal black.

However, when a graphite-based active material is mainly used as the negative electrode active material, a carbon black-based conductive material may be appropriately used as the second conductive material in consideration of excellent dispersibility in the negative electrode active material and electrical characteristics.

That is, the first binder and the second binder may each independently include at least one selected from the group consisting of a polyvinylidene fluoride-hexafluoropropylene copolymer (PVDF-co-HFP), polyvinylidene fluoride, polyacrylonitrile, polymethylmethacrylate, polyvinyl alcohol, carboxymethyl cellulose (CMC), starch, hydroxypropyl cellulose, regenerated cellulose, polyvinyl pyrrolidone, tetrafluoroethylene, polyethylene, polypropylene, polyacrylic acid, and styrene butadiene rubber (SBR).

The negative electrode active material layer may have a thickness of 100 µm to 200 µm.

Specifically, the negative electrode active material layer may have a thickness of 100 µm to 200 µm, 100 µm to 150 µm, or 100 µm to 130 µm.

If the negative electrode active material layer has a thickness of less than 100 µm, sufficient adhesion between the coating layer and the negative electrode active material layer may not be achieved or scratch resistance may be reduced, and if the negative electrode active material layer has a thickness of more than 200 µm, interfacial resistance may excessively increase.

In the negative electrode for a lithium secondary battery according to one embodiment, the ratio of the thickness of the coating layer to the thickness of the negative electrode active material layer may be 0.005 to 0.2.

Specifically, the ratio of the thickness of the coating layer to the thickness of the negative electrode active material layer may be 0.005 or more, 0.007 or more, or 0.008 or more, and 0.2 or less, 0.02 or less, or 0.015 or less, 0.005 to 0.2, 0.007 to 0.2, 0.008 to 0.2, 0.005 to 0.02, 0.007 to 0.02, 0.008 to 0.02, 0.005 to 0.015, 0.007 to 0.015, or 0.008 to 0.015.

If the ratio of the thickness of the coating layer to the thickness of the negative electrode active material layer is less than 0.005, the coating layer is excessively thin, and thus sufficient adhesion between the coating layer and the negative electrode active material layer may not be achieved or scratch resistance may be reduced, and if the ratio of the thickness of the coating layer to the thickness of the negative electrode active material layer is more than 0.2, the coating layer becomes excessively thick, and thus interfacial resistance may excessively increase.

Meanwhile, the negative electrode active material layer may include the negative electrode active material in an amount of 80 wt% to 98 wt%, or 85 wt% to 98 wt%, or 90 wt% to 97 wt%, based on the total weight of the negative electrode active material layer, the second binder in an amount of 0.5 wt% to 15 wt%, or 0.7 wt% to 10 wt%, or 1 wt% to 5 wt%, based on the total weight of the negative electrode active material layer, and the second conductive material in an amount of 0.1 wt% to 10 wt%, or 0.2 wt% to 5 wt%, or 0.3 wt% to 2 wt%, based on the total weight of the negative electrode active material layer.

As the negative electrode active material layer includes the negative electrode active material, the second binder, and the second conductive material in amounts within the above ranges, the adhesion of the negative electrode active material layer may be further improved and, at the same time, uniform dispersion of the negative electrode active material and the conductive material may be achieved, and excellent electrochemical characteristics of the negative electrode for a lithium secondary battery may be achieved.

The negative electrode active material layer may be attached onto the coating layer with an adhesion of 30 gf/20 mm to 50 gf/20 mm.

The adhesion of the negative electrode active material layer to the coating layer may be achieved as the coating layer and the negative electrode active material layer satisfy the above-described composition and thickness.

Specifically, the negative electrode active material layer may be attached onto the coating layer with an adhesion of 30 gf/20 mm to 50 gf/20 mm, 35 gf/20 mm to 50 gf/20 mm, or 40 gf/20 mm to 50 gf/20 mm. As the negative electrode active material layer is attached onto the coating layer with an adhesion of 30 gf/20 mm to 50 gf/20 mm, excellent electrochemical characteristics may be maintained for a long period of time, and excellent long-term life characteristics of the lithium secondary battery may be ensured.

According to another embodiment of the present invention, there is provided a method for producing a negative electrode for a lithium secondary battery, including steps of: applying a slurry composition for forming a coating layer, which includes a first binder, a first conductive material, and a solvent, onto a metal current collector, followed by drying to form a coating layer; applying a negative electrode slurry composition, which includes a negative electrode active material, a second binder, a second conductive material, and a solvent, onto the coating layer; and pressing the negative electrode slurry composition, wherein the first conductive material includes multi-walled carbon nanotubes, and the slurry composition for forming a coating layer includes the first binder in an amount of 400 parts by weight to 2,000 parts by weight based on 100 parts by weight of the multi-walled carbon nanotubes.

The types of the negative electrode active material, the first conductive material, the second conductive material, the first binder and the second binder are as already described above, and the content ranges of these components are also as those described above with respect to the content range of each component included in the finally formed active material layer, and thus further description thereof will be omitted.

As the solvent, a general solvent, for example, N-methylpyrrolidone, acetone, water, etc., may be used, and the slurry composition may be formed by mixing and stirring the components in such a solvent so that the solid content concentration is 30 to 70 wt%, or 40 to 60 wt%.

After forming the slurry composition for forming a coating layer, the slurry composition for forming a coating layer may be applied to the negative electrode current collector using a general coating method. The coating method is not particularly limited, and for example, a coating method using a slot die may be applied, or any other methods such as a Mayer bar coating method, a gravure coating method, a dip coating method, or a spray coating method may be applied without particular limitation.

In addition, after forming the negative electrode slurry composition, the negative electrode slurry composition may be applied onto the coating layer using a general coating method. This coating method is not particularly limited, and for example, a coating method using a slot die may be applied, or any other methods such as a Mayer bar coating method, a gravure coating method, a dip coating method, or a spray coating method may be applied without particular limitation.

After this application process, a pressing process is performed on the negative electrode slurry composition using a pressing device such as a roll pressing device.

After the above-described pressing process is performed, an additional step of drying the slurry composition to remove the solvent may be performed. This drying process may be performed by a general method using, for example, an infrared drying device.

The negative electrode for a lithium secondary battery produced by the above-described method may exhibit excellent adhesion and peeling resistance of the active material layer, and as a result, a lithium secondary battery including the same may exhibit significantly improved life characteristics.

Meanwhile, according to still another embodiment of the invention, there is provided a lithium secondary battery including the above-described negative electrode for a lithium secondary battery. Such a lithium secondary battery may be produced and provided by injecting a lithium salt-containing electrolyte into an electrode assembly including a positive electrode, the above-described negative electrode, and a separator interposed therebetween.

The positive electrode may be produced by mixing a positive electrode active material, a conductive material, a binder, and a solvent to prepare a slurry composition, and then directly coating a metal current collector with the slurry composition. Alternatively, the positive electrode may be produced by casting the slurry composition onto a separate support and laminating a positive electrode active material film peeled from the support onto a metal current collector.

The active material that is used for the positive electrode may include active material particles of any one or a mixture of two or more selected from the group consisting of LiCoO₂, LiNiO₂, LiMn₂O₄, LiCoPO₄, LiFePO₄ and LiNi_{1-x-y-z}CoₓM1_{y}M2_{z}O₂, wherein M1 and M2 are each independently any one selected from the group consisting of Al, Ni, Co, Fe, Mn, V, Cr, Ti, W, Ta, Mg and Mo, and x, y and z each independently represent the atomic fraction of oxide composition elements, and satisfy 0≤x<0.5, 0≤y<0.5, 0≤z<0.5, and 0<x+y+z≤ 1.

Meanwhile, the conductive material, the binder, and the solvent may be used in the same manner as those used in the production of the negative electrode.

The separator may be a conventional porous polymer film used conventionally as a separator. For example, the porous polymer film may be a porous polymer film made of a polyolefinic polymer, such as an ethylene homopolymer, a propylene homopolymer, an ethylene-butene copolymer, an ethylene/hexene copolymer, or an ethylene/methacrylate copolymer. These porous polymer films may be used alone or in the form of a laminate. In addition, an insulating thin film having high ion permeability and mechanical strength may be used. The separator may include a safety reinforced separator (SRS) including a ceramic material coating formed on the surface of the separator to a small thickness. In addition, a conventional porous non-woven fabric, such as a non-woven fabric made of high-melting-point glass fibers, polyethylene terephthalate fibers, or the like, may be used, without being limited thereto.

The electrolyte may contain a lithium salt and an organic solvent for dissolving the lithium salt.

As the lithium salt, any lithium salt may be used without limitation as long as it is used conventionally for an electrolyte for a lithium secondary battery. For example, the anion of the lithium salt may be any one selected from the group consisting of F⁻, Cl⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻.

As the organic solvent contained in the electrolyte, any organic solvent may be used without limitation as long as it is conventionally used. Typically, the organic solvent may be at least one selected from the group consisting of propylene carbonate, ethylene carbonate, diethyl carbonate, dimethyl carbonate, ethyl methyl carbonate, methyl propyl carbonate, dipropyl carbonate, dimethyl sulfoxide, acetonitrile, dimethoxyethane, diethoxyethane, vinylene carbonate, sulfolane, gamma-butyrolactone, propylene sulfite, and tetrahydrofuran.

Particularly, among the carbonate-based organic solvents, ethylene carbonate and propylene carbonate, which are cyclic carbonates, are high-viscosity organic solvents and may be preferably used as they can easily dissociate the lithium salt in the electrolyte due to their high dielectric constant. When such a cyclic carbonate is used after mixing it with a linear carbonate having low viscosity and a low dielectric constant, such as dimethyl carbonate or diethyl carbonate, at a suitable ratio, it is possible to prepare an electrolyte having higher electrical conductivity, and thus this mixture may be more preferably used.

Optionally, the electrolyte may further contain additives such as an overcharge-preventing agent, which are contained in a conventional electrolyte.

The lithium secondary battery may be produced by interposing the separator between the positive electrode and the negative electrode to form an electrode assembly, placing the electrode assembly in, for example, a pouch, a cylindrical battery case or a prismatic battery case, and then injecting the electrolyte thereinto. Alternatively, the lithium secondary battery may be produced by stacking the electrode assemblies, impregnating the stack with the electrolyte, and placing the resulting product in a battery case, followed by sealing.

The lithium secondary battery may be of a stack type, a wound type, a stack and folding type, or a cable type.

The above-described lithium secondary battery may be used for a battery cell that is used as a power source for a compact device, and may be preferably used as a unit battery for a medium- or large-size battery module including a plurality of battery cells. Preferred examples of the medium- or large-size device include electric vehicles, hybrid electric vehicles, plug-in hybrid electric vehicles, power storage systems, and the like. Particularly, the lithium secondary battery may be useful for batteries for hybrid electric vehicles and new & renewable energy storage batteries, which require high output.

### Mode for Invention

Hereinafter, preferred examples will be presented to help understand the present invention. However, the following examples are only intended to illustrate the present invention and the present invention is not limited only to these examples.

### Example 1

### (1) Production of Negative Electrode

Multi-walled carbon nanotubes (product name: BT1004M (LG Chem), BET: 180 m²/g, bulk density (BD): 130 kg/m³, average diameter: 13 nm) as a first conductive material were dispersed in polyvinylpyrrolidone in an amount of 2.4 wt%, and then the aqueous binder SBR (M37, ADB22) as a first binder was added thereto in an amount five times the weight of the first conductive material, thereby preparing an aqueous slurry for forming a coating layer having a solid content of 17%.

A copper current collector (8 µm thick and 260 mm wide) was used as a negative electrode current collector. The aqueous slurry composition was applied to one surface of the copper current collector in a loading amount of 15 mg/cm² using a micro-gravure coater, and dried at 100°C for 2 minutes to form a coating layer (1.1 µm thick after coating) on the negative electrode current collector.

Silicon carbide-based powder as a negative electrode active material, carbon black as a second conductive material, and styrene-butadiene rubber (SBR) and carboxymethyl cellulose (CMC) as a binder (second binder) were added in amounts of 95.5 wt%, 1 wt%, 2.5 wt%, and 1 wt%, respectively, to N-methyl-2 pyrrolidone (NMP) as a solvent, thereby preparing a negative electrode slurry composition.

The negative electrode slurry composition was applied (230 µm thick after application) onto the coating layer formed on the negative electrode current collector in a loading amount of 15 mg/cm².

The slurry composition applied onto the copper current collector as described above was subjected to a pressing process using a pressing device at 60°C, and then subjected to mid-infrared drying at 100°C for 10 hours at an evaporation rate of 605 g/min, thereby producing the negative electrode of Example 1, which includes the negative electrode active material layer formed on the coating layer.

### (2) Production of Positive Electrode

A positive electrode slurry was prepared by adding 97.5 wt% of a lithium-nickel-cobalt-manganese compound as a positive electrode active material, 1 wt% of carbon black as a conductive material, and 1.5 wt% of PVDF as a binder to N-methyl-2 pyrrolidone (NMP) as a solvent. The positive electrode slurry was applied to a 10-µm thick aluminum (Al) thin film as a positive electrode current collector and dried to produce a positive electrode which was then roll-pressed, thereby producing a positive electrode.

### (3) Battery Production

An electrode assembly was prepared by interposing a separator between the negative electrode and the positive electrode and stacking them using a stacking method. The electrode assembly was punched into a coin shape, and an electrolyte (propylene carbonate (PC): ethyl methyl carbonate (EMC): ethylene carbonate (EC) = 3:4:3 (volume ratio), 1 mole lithium hexafluorophosphate (LiPF₆)) was injected into the assembled battery, thereby producing a lithium secondary battery.

### Example 2

A negative electrode was produced in the same manner as in Example 1, except that the aqueous binder SBR (M37, ADB22) was added in an amount 10 times the weight of the first conductive material in the preparation of the aqueous slurry for forming a negative electrode coating layer, and a coating layer was formed on the negative electrode current collector so that the thickness after coating was 1.0 µm. In addition, a positive electrode and a battery were produced in the same manner as in Example 1.

### Example 3

A negative electrode was produced in the same manner as in Example 1, except that a 1:1 (w/w) mixture of multi-walled carbon nanotubes (product name: BT2001M, BET: 380 m²/g, bulk density (BD): 75 kg/m³, average diameter: 6 nm) and Denka carbon black (solid content: 20 wt%, Li-250, BET: 60 m²/g, DBP: 200 ml/100 g) was used instead of using multi-walled carbon nanotubes (product name: BT1004M (LG Chem), BET: 180 m²/g, bulk density (BD): 130 kg/m³, average diameter: 6 nm) as the first conductive material in the preparation of the aqueous slurry for forming a negative electrode coating layer, and a coating layer was formed on the negative electrode current collector so that the thickness after coating was 1.0 µm. In addition, a positive electrode and a battery were produced in the same manner as in Example 1.

### Comparative Example 1

A negative electrode was produced in the same manner as in Example 1, except that only Denka carbon black (solid content: 20 wt%, Li-250, BET: 60 m²/g, DBP: 200 ml/100 g) was used instead of using multi-walled carbon nanotubes (product name: BT1004M (LG Chem), BET: 180 m²/g, bulk density (BD): 130 kg/m³, average diameter: 6 nm) as the first conductive material in the preparation of the aqueous slurry for forming a negative electrode coating layer, and a coating layer was formed on the negative electrode current collector so that the thickness after coating was 1.0 µm. In addition, a positive electrode and a battery were produced in the same manner as in Example 1.

### Comparative Example 2

A negative electrode was produced in the same manner as in Example 1, except that the aqueous binder SBR (M37, ADB22) as the first binder was added in an amount equal to the weight of the first conductive material in the preparation of the aqueous slurry for forming a negative electrode coating layer, and a coating layer was formed on the negative electrode current collector so that the thickness after coating was 1.0 µm. In addition, a positive electrode and a battery were produced in the same manner as in Example 1.

### Comparative Example 3

A negative electrode was produced in the same manner as in Example 1, except that the aqueous binder SBR (M37, ADB22) as the first binder was added in an amount 0.5 times the weight of the first conductive material in the preparation of the aqueous slurry for forming a negative electrode coating layer, and a coating layer was formed on the negative electrode current collector so that the thickness after coating was 1.0 µm. In addition, a positive electrode and a battery were produced in the same manner as in Example 1.

### Comparative Example 4

A negative electrode was produced in the same manner as in Example 1, except that a coating layer was formed on the negative electrode current collector so that the thickness after coating was 0.2 µm. In addition, a positive electrode and a battery were produced in the same manner as in Example 1.

### Comparative Example 5

A negative electrode was produced in the same manner as in Example 1, except that a coating layer was formed on the negative electrode current collector so that the thickness after coating was 32.0 µm. In addition, a positive electrode and a battery were produced in the same manner as in Example 1.

### Comparative Example 6

A negative electrode was produced in the same manner as in Example 1, except that the aqueous binder SBR (M37, ADB22) as the first binder was added in an amount 3 times the weight of the first conductive material in the preparation of the aqueous slurry for forming a negative electrode coating layer, and a coating layer was formed on the negative electrode current collector so that the thickness after coating was 1.0 µm. In addition, a positive electrode and a battery were produced in the same manner as in Example 1.

### Test Example 1: Adhesion

In the negative electrodes produced in the Examples and the Comparative Examples, the adhesion between the negative electrode active material layer and the coating layer was measured in the following manner.

First, each negative electrode sample was cut to a predetermined size (50 mm x 50 mm) and fixed onto a slide glass, and then the adhesion between the negative electrode active material layer and the coating layer was measured at an angle of 180°. The adhesion was measured three times for each sample and the average value was calculated.

### Test Example 2: Peel Strength

In the negative electrodes produced in the Examples and the Comparative Examples, the peel strength was measured for the laminate including the negative electrode current collector having the coating layer formed thereon.

The negative electrode current collector having the coating layer formed thereon was punched to a predetermined size (60 mm x 60 mm), and the average peel strength was measured after horizontal cutting for 5 minutes.

### Test Example 3: Interfacial Resistance

In the negative electrodes produced in the Examples and the Comparative Examples, the interfacial resistance was measured in the following manner.

First, each negative electrode sample was punched to a predetermined size (50 mm x 50 mm) using a puncher. Using an MP tester (HIOKI), the thickness of the punched electrode, the thickness of the copper foil, and the resistivity of the current collector were input, respectively. Then, the punched electrode was placed under the tip with the built-in probe, the bar was lowered, and the interfacial resistance was measured.

### Test Example 4: Scratch Resistance

In the negative electrodes produced in the Examples and the Comparative Examples, the scratch resistance was measured for the laminate including the negative electrode current collector having the coating layer formed thereon.

The negative electrode current collector having the coating layer formed thereon was punched to a predetermined size (60 mm x 60 mm), polyethylene terephthalate was attached to the other surface of the negative electrode current collector, and the surface of the coating layer was rubbed back and forth three times with the tip of a rubbing tester at a speed of 27. At this time, the area of the negative electrode current collector exposed was measured.

The results are shown in Table 1 below.

**[Table 1]**

| | | Example 1 | Example 2 | Example 3 | Comp. Example 1 | Comp. Example 2 | Comp. Example 3 | Comp. Example 4 | Comp. Example 5 | Comp. Example 6 |
|---|---|---|---|---|---|---|---|---|---|---|
| Coating layer | Thickness (µm) | 1.1 | 1.0 | 1.0 | 1.0 | 1.0 | 1.0 | 0.2 | 32 | 1.0 |
| | First binder: first conductiv e material (weight ratio) | 5:1 | 10:1 | 5:1 | 5;1 | 1:1 | 0.5:1 | 5:1 | 5:1 | 3:1 |
| | First binder: multi-walled carbon nanotubes (weight ratio) | 5:1 | 10:1 | 10:1 | - | 1:1 | 0.5:1 | 5:1 | 5:1 | 3:1 |
| | Scratch resistance (%, 500 g) | Less than 1% | Less than 1% | 2% | 75% | Less than 1% | Less than 1% | - | Less than 1% | Less than 1% |
| | Peel strength (N/m) | 230 | 240 | 180 | 80 | 180 | 150 | 100 | 280 | 180 |
| Negativ e electrod e active material layer | Thickness (µm) | 108.2 | 114.3 | 116.6 | 116.2 | 111.6 | 112.2 | 126.3 | 124.4 | 114.4 |
| Negativ e electrod e | Adhesion (gf/20 mm) | 47 | 44 | 45 | 15 | 25 | 26 | 10 | 52 | 24 |
| | Interfacial resistance (Ωcm²) | 0.014 | 0.016 | 0.012 | 0.019 | 0.018 | 0.016 | 0.016 | 0.155 | 0.019 |
| Ratio of thickness of coating layer to thickness of negative electrode active material layer | | 0.01016 6 | 0.00874 9 | 0.00857 6 | 0.00860 6 | 0.00896 1 | 0.00891 3 | 0.00158 4 | 0.25723 5 | 0.00874 1 |

Referring to Table 1 above, it could be confirmed that, in the case of the Examples, excellent scratch resistance and high adhesion could be achieved, and the interfacial resistance was also very low.

On the other hand, it could be confirmed that, in the case of Comparative Examples 1 to 3 and 6, which did not use multi-walled carbon nanotubes or used multi-walled carbon nanotubes in an amount outside the content range used in the Examples of the present invention, the adhesion was poor, the scratch resistance was poor, or the interfacial resistance was high, compared to the Examples.

In addition, it could be confirmed that, in the case of Comparative Examples 4 and 5, in which multi-walled carbon nanotubes were used in the same amount as in the Examples of the present invention, but the ratio of the thickness of the coating layer to the thickness of the negative electrode active material layer was outside the range used in the Examples of the present invention, the adhesion was very low or the interfacial resistance was very high.

That is, the negative electrode for a lithium secondary battery according to the present invention has improved peeling resistance and adhesion of the negative electrode active material layer, which may improve the life characteristics of the negative electrode and the lithium secondary battery, and a lithium secondary battery including the negative electrode may maintain excellent charge/discharge cycle characteristics for a long period of time.

## Claims

1. A negative electrode for a lithium secondary battery, comprising:
a metal current collector;
a coating layer formed on at least one surface of the metal current collector and comprising a first binder and a first conductive material; and
a negative electrode active material layer formed on the coating layer and comprising a negative electrode active material, a second conductive material, and a second binder,
wherein the first conductive material comprises multi-walled carbon nanotubes,
the coating layer comprises the first binder in an amount of 400 parts by weight to 2,000 parts by weight based on 100 parts by weight of the multi-walled carbon nanotubes, and
a ratio of a thickness of the coating layer to a thickness of the negative electrode active material layer is 0.005 to 0.2.

2. The negative electrode according to claim 1, wherein the multi-walled carbon nanotubes have a specific surface area of 100 m²/g to 400 m²/g.

3. The negative electrode according to claim 1, wherein the multi-walled carbon nanotubes have a diameter of 1 nm to 40 nm and a length of 10 µm to 30 µm.

4. The negative electrode according to claim 1, wherein the multi-walled carbon nanotubes have a bulk density of 20 kg/m³ to 200 kg/m³.

5. The negative electrode according to claim 1, wherein the negative electrode active material comprises at least one graphite-based active material selected from the group consisting of natural graphite, artificial graphite, fibrous artificial graphite, graphitized black, and graphitized nanofibers.

6. The negative electrode according to claim 1, wherein the second conductive material comprises at least one selected from the group consisting of carbon black, acetylene black, Ketjen black, channel black, furnace black, lamp black, and thermal black.

7. The negative electrode according to claim 1, wherein the first binder and the second binder each independently comprise at least one selected from the group consisting of a polyvinylidene fluoride-hexafluoropropylene copolymer (PVDF-co-HFP), polyvinylidene fluoride, polyacrylonitrile, polymethylmethacrylate, polyvinyl alcohol, carboxymethyl cellulose (CMC), starch, hydroxypropyl cellulose, regenerated cellulose, polyvinyl pyrrolidone, tetrafluoroethylene, polyethylene, polypropylene, polyacrylic acid, and styrene butadiene rubber (SBR).

8. The negative electrode according to claim 1, wherein the coating layer comprises the multi-walled carbon nanotubes in an amount of 40 wt% to 100 wt% based on the total weight of the first conductive material.

9. The negative electrode according to claim 1, wherein the coating layer has a thickness of 0.1 µm to 5.0 µm.

10. The negative electrode according to claim 1, wherein the negative electrode active material layer has a thickness of 100 µm to 200 µm.

11. The negative electrode according to claim 1, wherein the metal current collector comprises at least one metal selected from the group consisting of copper, stainless steel, aluminum, nickel, and titanium.

12. The negative electrode according to claim 1, wherein the negative electrode active material layer is attached onto the coating layer with an adhesion of 30 gf/20 mm to 50 gf/20 mm.

13. A method for producing a negative electrode for a lithium secondary battery, comprising steps of:
applying a slurry composition for forming a coating layer, which comprises a first binder, a first conductive material, and a solvent, onto a metal current collector, followed by drying to form a coating layer;
applying a negative electrode slurry composition, which comprises a negative electrode active material, a second binder, a second conductive material, and a solvent, onto the coating layer; and
pressing the negative electrode slurry composition,
wherein the first conductive material comprises multi-walled carbon nanotubes, and
the slurry composition for forming a coating layer comprises the first binder in an amount of 400 parts by weight to 2,000 parts by weight based on 100 parts by weight of the multi-walled carbon nanotubes.

14. The method according to claim 13, further comprising, after the step of pressing the negative electrode slurry composition, a step of drying the negative electrode slurry composition to remove the solvent.

15. A lithium secondary battery, comprising:
a positive electrode for a lithium secondary battery;
the negative electrode for a lithium secondary battery according to claim 1; and
a separator interposed between the positive electrode and the negative electrode.
